# EUROPEAN PATENT SPECIFICATION

(11) **EP 1 992 823 B1**
(45) Date of publication and mention of the grant of the patent: **26.07.2017**
(21) Application number: 08033517.7
(22) Date of filing: 11.04.2008
(51) Int. Cl.: F04D 29/02, F04D 29/16, F01D 11/12

(54) **SEAL ASSEMBLY**
DICHTEINRICHTUNG
ENSEMBLE D'ÉTANCHÉITÉ

(30) Priority: 14.05.2007 GB 0709221
(43) Date of publication of application: 19.11.2008
(73) Proprietor: Rolls-Royce plc, London SW1E 6AT (GB)
(72) Inventor: Northfield, Quinten John, Bromley Kent BR2 0SH (GB)
(74) Representative: Rolls-Royce plc

(56) References cited:
- GB-A- 2 391 270
- US-A- 3 519 282
- US-A- 3 575 427
- US-A- 4 177 308
- US-A- 5 388 959

## Description

This invention relates to a sealing arrangement for sealing a gap between two relatively movable members. Such an arrangement may have application in sealing the gap between a compressor shroud and a rotor arm in a gas turbine engine.

Labyrinth seals are widely used for obstructing a gas flow path connecting different regions in a system, for example in an air system of a gas turbine engine. In use, labyrinth seals create a resistance to gas flow by forcing gas to traverse through a series of fins. The fins run close to the seal's outer lining, and pressure losses are generated by the acceleration and expansion of the gas as it passes between each fin tip and the lining.

In many cases centrifugal forces cause the fins to contact the seal's outer lining. Consequently, labyrinth seals are often designed with an abradable layer that tolerates rub. When the seal is first used the fin tips cut grooves in the layer, thereafter the fins tend not to rub except in cases of abnormal operation, for example in a gas turbine engine during hard landings.

A number of factors must be considered in selecting an appropriate material for use as an abradable layer, depending at least in part upon the composition and operating environment of the seal. For example, the layer should ideally be abradable without damage to the fin tips or the structure beneath the layer. Moreover, it is desirable for the abradable material not abraded by the fin tips to remain securely bonded to the structure beneath, both while other portions of the layer are removed by the fins and afterwards for the operational life of the seal.

US Patent No. 4177308 describes an abradable sealant material which is provided on engine casing walls, rotor blade ends and stator blade ends. The sealant material is homogeneous in nature, and applied as a paste to engine components. US Patent No. 5388959 describes a fan assembly with an abradable annular sheet of uniform composition directly bonded to the inner annular surface of a casing.

In the event that the structure beneath the abradable layer is formed from an organic matrix composite it is often difficult to apply a known abradable material for use as a labyrinth seal abradable layer. For example, it is likely that the organic matrix composite would be damaged and its structural integrity reduced by the temperature necessary to secure known abradable materials. Alternatively or additionally, known abradable materials often have dissimilar thermal expansion properties to organic matrix composites and so the abradable layer may delaminate if exposed to a thermal cycling environment, such as that present in gas turbine engines during operation.

According to an aspect of the present invention there is provided a seal assembly for sealing a gap between first and second relatively movable members of a gas turbine engine compression system, the first member has a sealing surface, the second member has a sacrificial abradable layer positioned opposite the sealing surface, in operation the sealing surface moves relative to, and abrades, the abradable layer thereby maintaining a seal between the members, characterised in that, the second member and the abradable layer comprise the same composite material, and at least one of the second member and abradable layer comprises a syntactic core.

In a preferred embodiment of the present invention, the second member is co-cured with the abradable layer and the composite material comprises substantially 45% bismaleimide matrix material and substantially 55% carbon fibre reinforcement material.

In another embodiment, the second member comprises a syntactic core and in a further embodiment the abradable layer comprises a syntactic core.

The present invention will now be described, by way of example only, with reference to the accompanying drawings in which:
Figure 1 is a diagrammatic view of a gas turbine engine having a seal assembly in accordance with the present invention;
Figure 2 is a cross-section view of a seal assembly according to the present invention;
Figure 3 is a cross-section view of an alternative arrangement of a seal assembly according to the present invention; and
Figure 4 is a cross section view of another alternative arrangement of a seal assembly according to the present invention.

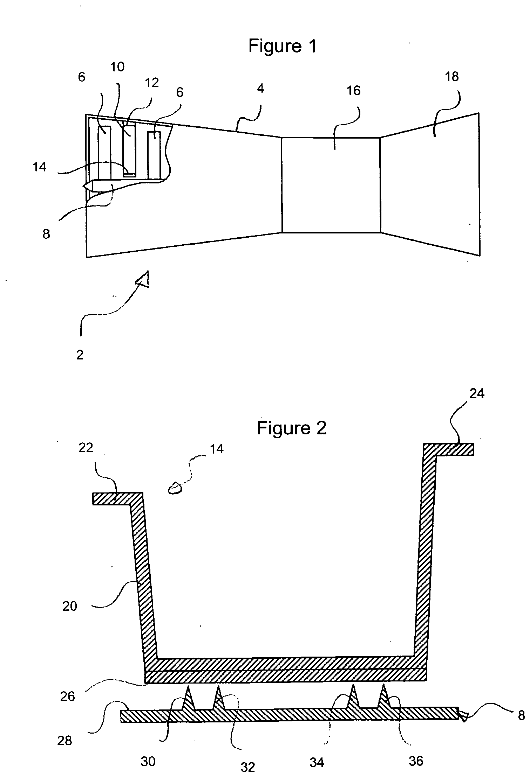

In Figure 1 there is shown a gas turbine engine 2, having a compressor 4, comprising rotor blades 6 connected at their radially inner ends to rotor arm 8, and stator blade 10 fixed in position by outer shroud 12 and inner shroud 14. In flow with compressor 4 is combustor section 16 and turbine 18.

In Figure 2 the inner shroud 14 comprises an annulus 20 with a U-shape cross-section and two flanges 22 and 24 positioned at the opening of the U-shape and extending axially outward. An abradable layer 26 is positioned on the radially inner surface of the base of the U-shape cross-sectioned annulus 20 and extends along its entire axial length. The rotor arm 8 is positioned co-axially within the annulus 20 and radially inward of the abradable layer 26. The outer surface of the rotor arm 8 defines a sealing surface 28 from which two fin pairs 30, 32 and 34, 36 extend towards the abradable layer 26 and maintain a clearance with it. In Figure 2 the annulus 20 and the abradable layer 26 are manufactured from an organic matrix composite comprising 45% bismaleimide resin and 55% IM7 carbon fibre, and the rotor arm 8 is manufactured from titanium.

The IM7 bismaleimide composite was chosen due to its tolerance to the harsh temperature environments present in a gas turbine engine and because it has been shown to cause particularly low wear on titanium fin tips. Additionally, either long or short fibre reinforcement materials may be used to bring the present invention into effect although design changes may be necessary to compensate for the differing strength properties associated with each method of construction.

When the arrangement of Figure 2 is installed within a gas turbine engine, the flanges 22 and 24 of the inner shroud 14 inter-engage with cooperating receiving means on each stator blade (not shown). In operation, the inner shroud 14 is stationary, the rotor arm 8 rotates within the inner shroud 14, and the centrifugal forces generated by the rotation stretch the radial height of the fins 30, 32, 34 and 36 such that each fin tip engages with, and cuts a groove in, the abradable layer 26. To preserve the structural integrity of annulus 20 the radial thickness of the abradable layer 26 is greater than the anticipated radial depth of a groove created during engine operation.

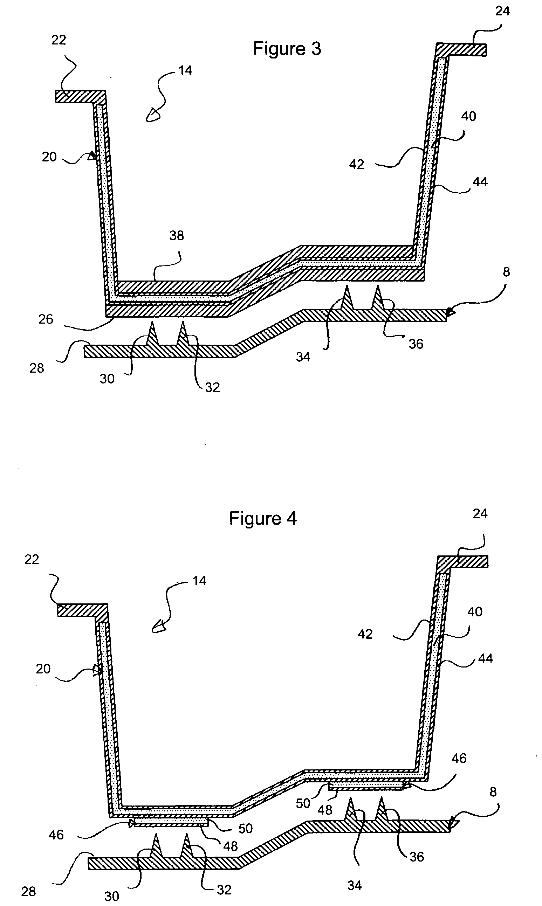

In Figure 3 the base of annulus 20 and the abradable layer 26 are formed with a step midway along their axial lengths, and the rotor arm 8 is formed with a corresponding step so that the abradable layer 26 maintains a constant radial height with the part of the sealing surface 28 in-between the fins 30, 32, 34 and 36. A balancing layer 38, of substantially equal radial height to the abradable layer 26, is positioned on the radially outer surface of the base of the U-shape cross-sectioned annulus 20 and extends along its axial length. In the embodiment of Figure 3, the annulus 20 is manufactured with a syntactic core 40, sandwiched between two composite laminates 42 and 44. The composite laminates 42 and 44, the abradable layer 26, and the balancing layer 38 are manufactured from an organic matrix composite comprising 45% bismaleimide resin and 55% IM7 carbon fibre, whereas the syntactic core 40 comprises 45% bismaleimide resin and 55% IM7 carbon microballoons.

In Figure 3, adding the balancing layer 38 preserves the shape of the inner shroud 14 when it is subject to thermal cycling, by ensuring uniform thermal expansion of the inner shroud 14 with respect to the fins 30, 32, 34 and 36 of the rotor arm 8. This in turn ensures uniform wear of the abradable layer 26 and preserves the structural integrity of the annulus 20 for all operational temperatures. Addition of the syntactic core 40 provides weight saving; whilst the composite laminates 42 and 44 preserve the seal strength.

Figure 4 is a section similar to Figure 3 but in this arrangement the balancing layer 38 has been removed and the abradable layer 26 has been replaced by abradable layers 46 which have a shorter axial length and are only located directly opposite one fin pair, either 30, 32 or 34, 36. Furthermore, in this embodiment the abradable layers 46 comprise two composite layers, a radially inner composite laminate 48 and a radially outer syntactic core 50, arranged such that the syntactic core 50 of the abradable layer 46 is sandwiched between the radially inner composite laminate 48 of the abradable layer 46 and the radially inner composite laminate 44 of the annulus 20. As in Figure 4 the composite laminates 42, 44 and 48 are manufactured from an organic matrix composite comprising 45% bismaleimide resin and 55% IM7 carbon fibre, whereas the syntactic cores 40 and 50 comprise 45% bismaleimide resin and 55% IM7 carbon microballoons.

Adding the short axial width abradable layer 46 provides weight saving by reducing the amount of material used in forming the seal. Providing the abradable layer 46 with the syntactic core 50 adds further weight savings, while the composite laminate 48 preserves the seal strength.

The present invention would be suitable for use in other turbo machinery and many other applications where known labyrinth seals are currently used. Other organic matrix composite materials, and indeed other composite materials, may be substituted in alternative applications if different operational environments impose further restrictions on the material properties of the seal, or relax the restrictions such that a cheaper or more widely available material could be chosen.

In order to ensure that the thermal expansion of the seal is uniform across the complete temperature range of operation some of the embodiments discussed provide additional features 38 to balance thermal expansion of the composite material with reference to the seal fins. A further modification within the ambit of the present invention would be to use a quasi-isotropic composite to ensure material deformation as a result of thermal expansion is minimised and uniform in all directions.

## Claims

1. A seal assembly for sealing a gap between first (8) and second (14) relatively movable members of a gas turbine engine (2) compression system (4), the first member (8) has a sealing surface (28), the second member (14) has a sacrificial abradable layer (26) positioned opposite the sealing surface (28), in operation the sealing surface (28) moves relative to, and abrades, the abradable layer (26) thereby maintaining a seal between the members (8,14), **characterised in that**, the second member (14) and the abradable layer (26) comprise the same composite material, and at least one of the second member (14) and abradable layer (26) comprises a syntactic core (40,50).

2. A seal assembly as claimed in claim 1 wherein the second member (14) is co-cured with the abradable layer (26).

3. A seal assembly as claimed in claim 1 or claim 2 wherein the composite material comprises substantially 45% bismaleimide matrix material and substantially 55% carbon fibre reinforcement material.

4. A seal assembly as claimed in claims 1, 2 or 3 wherein the second member (14) comprises a syntactic core (40).

5. A seal assembly as claimed in any preceding claim wherein the abradable layer (26) comprises a syntactic core (50).

6. A seal assembly as claimed in any preceding claim wherein the sealing surface (28) comprises at least one protrusion (30, 32, 34, 36) extending towards the abradable layer (26).

7. A seal assembly as claimed in claim 6 wherein the abradable layer (26) is only positioned directly opposite the at least one protrusion (30, 32, 34, 36).

8. A seal assembly as claimed in any preceding claim wherein the first member (8) is a rotor arm (8) and the second member (14) is a gas turbine compressor shroud (14).

9. A gas turbine (2) including a seal assembly as claimed in claims 1 to 8.

## Patentansprüche

1. Dichtanordnung zum Abdichten eines Spalts zwischen ersten (8) und zweiten (14) relativ beweglichen Elementen eines Kompressionssystems (4) eines Gasturbinenmotors (2), wobei das erste Element (8) eine Dichtfläche (28) hat, das zweite Elemente (14) eine abreibbare Opferschicht (26) hat, die gegenüber der Dichtfläche (28) positioniert ist, die Dichtfläche (28) sich im Betrieb relativ zu der abreibbaren Schicht (26) bewegt und diese abreibt, wodurch eine Dichtung zwischen den Elementen (8, 14) aufrechterhalten wird, **dadurch gekennzeichnet, dass** das zweite Element (14) und die abreibbare Schicht (26) dasselbe Verbundmaterial aufweisen und mindestens eines von dem zweiten Element (14) und der abreibbaren Schicht (26) einen syntaktischen Kern (40, 50) aufweist.

2. Dichtanordnung nach Anspruch 1, wobei das zweite Element (14) zusammen mit der abreibbaren Schicht (26) ausgehärtet wird.

3. Dichtanordnung nach Anspruch 1 oder Anspruch 2, wobei das Verbundmaterial im Wesentlichen 45 % Bismaleimid-Matrixmaterial und im Wesentlichen 55 % Kohlefaser-Verstärkungsmaterial aufweist.

4. Dichtanordnung nach den Ansprüchen 1, 2 oder 3, wobei das zweite Element (14) einen syntaktischen Kern (40) aufweist.

5. Dichtanordnung nach einem der vorhergehenden Ansprüche, wobei die abreibbare Schicht (26) einen syntaktischen Kern (50) aufweist.

6. Dichtanordnung nach einem der vorhergehenden Ansprüche, wobei die Dichtfläche (28) mindestens einen Vorsprung (30, 32, 34, 36) aufweist, der sich zu der abreibbaren Schicht (26) hin erstreckt.

7. Dichtanordnung nach Anspruch 6, wobei die abreibbare Schicht (26) nur direkt gegenüber dem mindestens einen Vorsprungs (30, 32, 34, 36) positioniert ist.

8. Dichtanordnung nach einem der vorhergehenden Ansprüche, wobei das erste Element (8) ein Rotorarm (8) ist und das zweite Element (14) eine Kompressorhülle (14) der Gasturbine ist.

9. Gasturbine (2) mit einer Dichtanordnung nach den Ansprüchen 1 bis 8.

## Revendications

1. Ensemble d'étanchéité destiné à étanchéifier un espace entre un premier (8) et un deuxième (14) éléments relativement mobiles d'un système de compression (4) d'un moteur à turbine à gaz (2), le premier élément (8) possède une surface d'étanchéité (28), le deuxième élément (14) possède une couche sacrificielle abradable (26) positionnée en regard de la surface d'étanchéité (28), en fonctionnement la surface d'étanchéité (28) se déplace par rapport à, et abrade, la couche abradable (26), maintenant de la sorte une étanchéité entre les éléments (8, 14), **caractérisé en ce que**, le deuxième élément (14) et la couche abradable (26) comprennent le même matériau composite, et au moins l'un du deuxième élément (14) et de la couche abradable (26) comprend un coeur syntactique (40, 50).

2. Ensemble d'étanchéité selon la revendication 1, dans lequel le deuxième élément (14) est co-traité avec la couche abradable (26).

3. Ensemble d'étanchéité selon la revendication 1 ou 2, dans lequel le matériau composite comprend sensiblement 45 % de matériau à matrice bismaléimide et sensiblement 55 % de matériau à renfort de fibres de carbone.

4. Ensemble d'étanchéité selon la revendication 1, 2 ou 3, dans lequel le deuxième élément (14) comprend un coeur syntactique (40).

5. Ensemble d'étanchéité selon l'une quelconque des revendications précédentes, dans lequel la couche abradable (26) comprend un coeur syntactique (50).

6. Ensemble d'étanchéité selon l'une quelconque des revendications précédentes, dans lequel la surface d'étanchéité (28) comprend au moins une protubérance (30, 32, 34, 36) se déployant en direction de la couche abradable (26).

7. Ensemble d'étanchéité selon la revendication 6, dans lequel la couche abradable (26) est uniquement positionnée directement en regard de l'au moins une protubérance (30, 32, 34, 36).

8. Ensemble d'étanchéité selon l'une quelconque des revendications précédentes, dans lequel le premier élément (8) est un bras de rotor (8) et le deuxième élément (14) est un déflecteur de compresseur de turbine à gaz (14).

9. Turbine à gaz (2) incluant un ensemble d'étanchéité selon l'une quelconque des revendications 1 à 8.
